# EUROPEAN PATENT APPLICATION

(11) **EP 1 515 230 A2**
(43) Date of publication of application: **16.03.2005**
(21) Application number: 04103868.8
(22) Date of filing: 11.08.2004
(51) Int. Cl.: G06F 9/445

(54) **System and method for communication between computers via an integrated hardwaredevice**

(30) Priority: 10.09.2003 US 659756
(71) Applicant: MICROSOFT CORPORATION, Redmond, WA 98052 (US)
(72) Inventor: Koppelmann Cornillon, Edward Nathan, Bellevue, WA 98008 (US); Bhesania, Firdosh K., Kirkland, WA 98034 (US); Houston, Akil, Redmond, WA 98053 (US)
(74) Representative: Zimmer, Franz-Josef, Dr.

(57) **Abstract**

Apparatus and method for performing a computer setup. A communications router and a nonvolatile memory are operatively situated between two computers. The memory stores a driver for the communications router and a software load to be installed on at least one of the computers. An autorun function loads a driver for the communications router from the nonvolatile memory to at least one of the computers. Setup software is then installed via the communications router. Other aspects of the invention relate to computer-readable media for use in connection with the foregoing.

## Description

### TECHNICAL FIELD

Embodiments of the present invention relate to the field of communication between computers. In particular, embodiments of this invention relate to an integrated hardware device for automatically installing software computer-to-computer without requiring additional user interaction.

### BACKGROUND OF THE INVENTION

Computer users often find it necessary, or at least desirable, to communicate between computers. Although communication may be available via a data communication network, users are unable to easily load software and data from one computer to another. For example, if a user purchases a new computer, he or she may wish to "migrate" files from an old computer to the new computer. Head-to-head gaming and the like also present examples of connected computers in which software may be installed. Unfortunately, a simple, straightforward way to transfer software and data from one computer to another does not exist. This presents a usability problem with respect to how to connect the computers and how to transfer the data.

Operating systems and application programs commonly include a relatively tedious disk-based installation, or setup, program that does most of the work of preparing the installed program to work with the computer, printer, and other devices. Merely copying an image of one computer's hard disk to another computer's hard disk fails to provide installation flexibility and does not permit, for example, changing from one operating system to another. Also, imaging in this manner usually requires that the two computers be fairly similar machines.

Existing migration software products fail to solve the problems associated with software transfers because users typically have trouble identifying which computers are to be connected and how they should be connected. For example, these products may require fairly complicated network connections or first writing files to a high-capacity storage medium for transfer. In other words, conventional migration products usually require copying files on one computer to computer-readable media and then copying the files from the media to the other computer. Thus, the machines must have, for example, CD read/write capability.

Conventional file transfer devices can transfer data between computers via a universal serial bus (USB) cable with or without establishing a network connection. Unfortunately, such devices still present numerous usability problems (e.g., the user must install drivers on both the sending and receiving computers). Generally, if the user plugs in the USB cable of the transfer device prior to installation of the driver software, the computer could misidentify the cable. Known USB file transfer cables also usually operate in either a networking mode or a file transfer mode, which must be selected prior to use. Moreover, the user must load file transfer software beforehand and such transfer devices cannot work at all unless both computers have installed operating systems. Similarly, parallel cables require separate installation of software on each machine and selection of a transfer mode.

Accordingly, unified computer-to-computer communication is desired to address one or more of these and other disadvantages and to allow, among other things, operating system setup and software migration between computers.

### SUMMARY OF THE INVENTION

Embodiments of the invention overcome one or more deficiencies in the prior art by providing a unified hardware/software approach to facilitate communication between computers. In one aspect, the invention provides an integrated hardware device that includes communication software and a USB communication hub. In another aspect, client machines utilizing plug and play operating system functionality automatically recognize the communication device and install the communication software without the need for additional user interaction. Moreover, the features of the present invention described herein are less laborious and easier to implement than currently available techniques as well as being economically feasible and commercially practical.

An apparatus embodying aspects of the invention includes first and second connectors adapted for connection to a computer. The apparatus also includes a communications router and a nonvolatile memory operatively situated between the connectors. The memory stores a driver for the communications router and a software load to be installed on a computer to which either the first connector or the second connector is connected.

Another embodiment of the invention involves a method for performing a computer setup. The method includes operatively connecting a communications router and a nonvolatile memory between two computers. The method also includes initiating an autorun function by at least one of the computers and includes loading a driver for the communications router to at least one of the computers in response to the autorun function. In this instance, the driver resides in the nonvolatile memory. The method also includes installing setup software to at least one of the computers via the communications router. The setup software also resides in the nonvolatile memory.

One or more computer-readable media embodying aspects of the invention has a driver for a communications router, a user interface for guiding a user to transfer files from one computer to another computer via the communications router, and a setup program for automatically installing the user interface.

Alternatively, the invention may comprise various other methods and apparatuses.

Other features will be in part apparent and in part pointed out hereinafter.

### BRIEF DESCRIPTION OF THE DRAWINGS

FIG. 1 is a block diagram of an integrated hardware device in accordance with embodiments of the present invention.

FIG. 2 is a flow diagram illustrating exemplary operations for computer-to-computer communication using the device of FIG. 1.

FIG. 3 is a block diagram of an exemplary computer-readable medium of the device of FIG. 1.

FIG. 4 is a block diagram illustrating exemplary components of a computer for use in FIG. 1.

Corresponding reference characters indicate corresponding parts throughout the drawings.

### DETAILED DESCRIPTION OF THE INVENTION

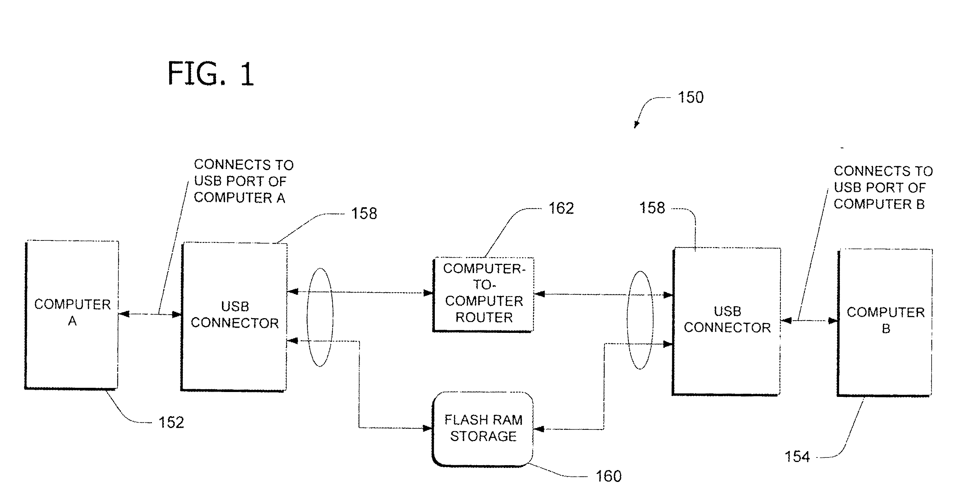

Referring now to the drawings, FIG. 1 illustrates an apparatus for facilitating computer-to-computer communication. The apparatus, indicated generally at 150 and referred to herein as an integrated hardware device, facilitates communication between a first computer 152 (e.g., computer A) and a second computer 154 (e.g., computer B). In one embodiment, the device 150 is a file transfer device including software integrated with a cable having standard universal serial bus (USB) connectors 158 at each end adapted for connection to a USB port of a computing device. In an alternative embodiment, USB connectors 158 serve as USB hubs.

The device 150 greatly simplifies the process of migrating between two computers 152, 154. As an example, computer 152 is a source computer from which files are to be transferred and computer 154 is a destination computer to which the transferred files from computer 152 are sent. Not only does device 150 make the physical connection between the source computer 152 and the destination computer 154 relatively easy to accomplish, it automates the actual software installation and running of a wizard for effectuating the transfer.

In the illustrated embodiment of FIG. 1, device 150 is adapted to connect computers 152, 154 (e.g., two personal computers) to each other via their USB ports. Making this connection permits files to be migrated from an old computer such as source computer 152 to a newer computer such as destination computer 154. Once connected, device 150 automatically installs a user interface (UI) (e.g., a migration wizard) for assisting the user in transferring the files. In the example of a file migration wizard, device 159 automatically updates the wizard from the newer machine (e.g., computer 154), if an update is available. As described in greater detail below, device 150 starts the migration wizard using the USB connection.

Advantageously, device 150 provides a novel process for installing software and/or performing computer-to-computer migration. Device 150 unifies the software installation process and the physical connection process as well as the running of the wizard into a single action, namely, plugging the cable into both machines. Although described herein largely in connection with computer-to-computer migration, it is to be understood that this process may also be used for computer-to-computer programs (e.g., head-to-head games).

Referring further to FIG. 1, the integrated hardware device 150 also includes a nonvolatile memory 160, such as a flash memory. According to embodiments of the invention, the nonvolatile memory 160 carries a driver for device 150 in addition to the software load (e.g., migration wizard and its installer) to install and run. When connected to either computer 152 or computer 154, memory 160 appears as, for example, a CD-ROM device or other recognizable media device. FIG. 1 further illustrates a computer-to-computer router 162, which handles the actual transfer of data between computer 154 and computer 152. In an alternative embodiment, device 150 may be used to install gaming software stored in nonvolatile memory 160 onto both computers 152, 154.

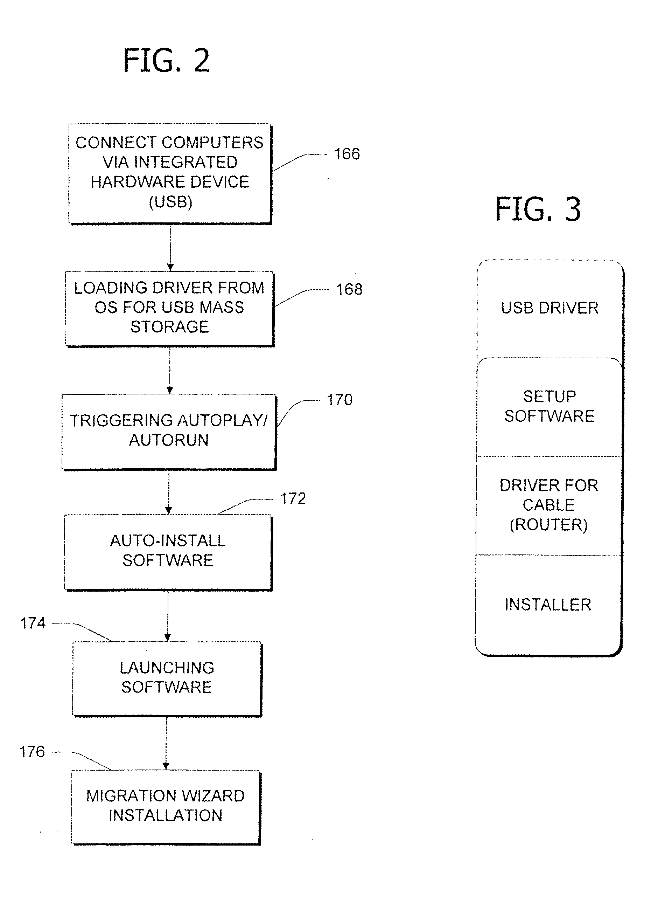

FIG. 2 is a flow diagram illustrating exemplary operations for computer-to-computer communication using the device 150 of FIG. 1. A user first connects integrated hardware device 150 to at least one of computer 152 and computer 154 as indicated at 166. As described above, device 150 is adapted for connection to a machine's USB port. When device 150 is plugged in, plug and play capability installs drivers for the USB connector 158. In this instance, drivers for a USB mass storage are loaded from the operating system at 168. Proceeding to 170, device 150 appears as, for example, a USB hub with a CD-ROM device to the connected machine, which triggers an autoplay or autorun function. In other words, nonvolatile memory 160 posing as a CD-ROM is detected and installed at 172. In one embodiment of the present invention, integrated hardware device 150 automatically shows up to the system as a USB hub having a CD-ROM device (i.e., memory 160) and a PC-to-PC communication device (appearing as a network connection) (i.e., router 162) on each side of the cable (i.e., at connectors 158). When device 150 is plugged in, plug and play capability installs the root drivers for it to bootstrap its other drivers on to the system. Once the "CD-ROM" drive is installed, it kicks off or launches software installation at 174. At 174, drivers for computer-to-computer integrated hardware device 150 are installed from nonvolatile memory 160 for both computers 152, 154. Installing these device drivers will signal one or both USB connectors 158 to show device 150. In turn, the connected computers automatically detect and install hardware device 150 using the drivers just installed. After signaling connectors 158, operations proceed to 176 for beginning installation of a user interface such as a migration wizard. When installed, the wizard is run with a command-line switch telling it to use the USB network connection as the computer-to-computer connection type.

It is to be understood that other types of media devices may initiate an autorun-type function and, thus, device 150 need not appear only as a CD-ROM device. Rather, integrated hardware device 150 may appear as any one of a number of media devices. In one exemplary embodiment, an autorun.inf file present on memory 160 triggers the autoplay feature in the operating system of one or both computers 152, 154 in much the same manner as with a CD-ROM.

The present invention simplifies installation of a migration wizard on the computer, the connecting of the computers to each other, and the running of the wizard. Before the invention described herein, a user needed to install the migration wizard, if available, on either one or both machines from media, sometimes needing to actually create the migration wizard installation media. The user also needed to manually run the wizard on both machines, determine on his or her own the type of connection between the computers (e.g., network mode or file transfer mode), ensure that the same type of connection was selected on both, and actually connect the cable between the two machines. All of this was required just to get the wizard running and connection going.

In contrast, embodiments of the present invention provide unified computer-to-computer communication to allow, among other things, operating system setup and software migration between computers. Advantageously, integrated hardware device 150 causes the migration wizard to be automatically installed and run from the cable, and bundling the software in with the computer-to-computer cable. This ensures the software needed to use the cable is not separated from the cable, and the cable is not lost from the migration wizard. In other words, if the user has one of the elements, he or she has both.

The extent of innovation is similar to the difference between simply putting an install floppy into a drive versus typing a:\setup.exe to install software, and the difference between putting a CD-ROM into a CD drive versus having the software automatically prompt the user for installation. Further, the extent of innovation provided by embodiments of the present invention combine with the difference between plugging in a new device, finding the device driver floppy for it, installing the driver so the device will work, plugging the device into the computer, and having the computer automatically recognize and install the device.

The integrated hardware device 150 of the present invention enables a software load (e.g., a migration wizard and its installer) to be placed in the nonvolatile storage of the device, flash memory 160, which manifests itself as a CD-ROM for installation and running after device 150 has been installed. The user can then simply plug the cable into both machines to install and run the software load. In this instance, the migration wizard will automatically know the USB computer-to-computer connection is available. The wizard automatically runs and skips the pages dealing with getting the migration wizard to the other machine and connecting the machines.

FIG. 3 is a block diagram of an exemplary computer-readable medium of the invention, namely, an illustration of the nonvolatile memory 160 of device 150. As shown, nonvolatile memory 160 stores setup software (e.g., a migration wizard), an installer for the setup software, and a driver for device 150.

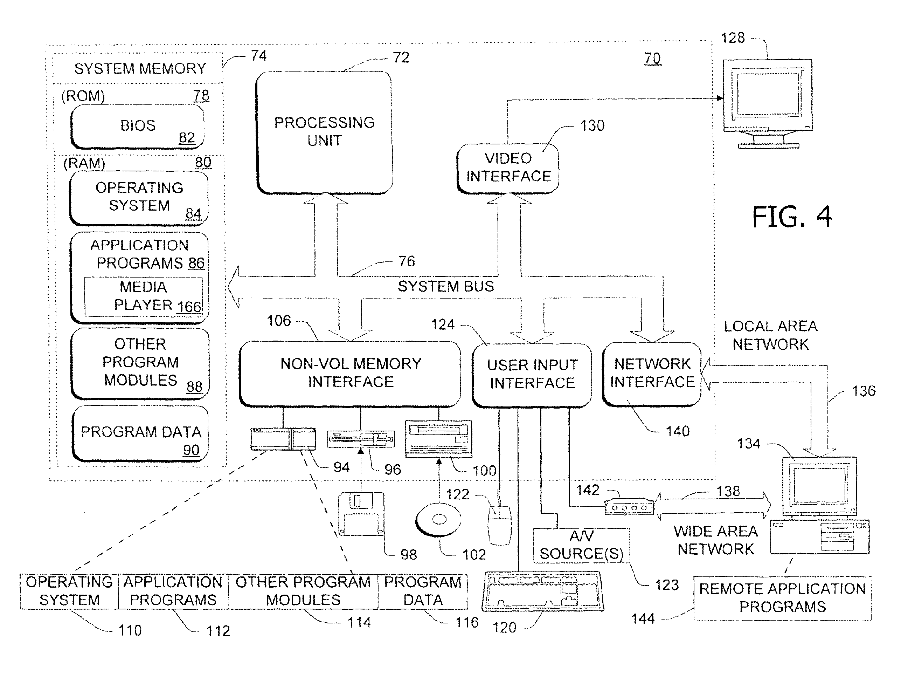

FIG. 4 shows one example of a general purpose computing device in the form of a computer 70. In one embodiment of the invention, a computer such as the computer 70 is suitable for use as computer 152 and as computer 154. It is to be understood that either or both of computers 152, 154 may be personal computers, personal digital assistants, computerized gaming systems, and the like, or a combination thereof.

In the illustrated embodiments, computer 70 has one or more processors or processing units 72 and a system memory 74. In the illustrated embodiment, a system bus 76 couples various system components including the system memory 74 to the processors 72. The bus 76 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 70 typically has at least some form of computer readable media. Computer readable media, which include both volatile and nonvolatile media, removable and non-removable media, may be any available medium that can be accessed by computer 70. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. For example, computer storage media include RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that can be used to store the desired information and that can accessed by computer 70. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Wired media, such as a wired network or direct-wired connection, and wireless media, such as acoustic, RF, infrared, and other wireless media, are examples of communication media. Combinations of the any of the above are also included within the scope of computer readable media.

The system memory 74 includes computer storage media in the form of removable and/or non-removable, volatile and/or nonvolatile memory. In the illustrated embodiment, system memory 74 includes read only memory (ROM) 78 and random access memory (RAM) 80. A basic input/output system 82 (BIOS), containing the basic routines that help to transfer information between elements within computer 70, such as during startup, is typically stored in ROM 78. The RAM 80 typically contains data and/or program modules that are immediately accessible to and/or presently being operated on by processing unit 72. By way of example, and not limitation, FIG. 4 illustrates operating system 84, application programs 86, other program modules 88, and program data 90.

The computer 70 may also include other removable/non-removable, volatile/nonvolatile computer storage media. For example, FIG. 4 illustrates a hard disk drive 94 that reads from or writes to non-removable, nonvolatile magnetic media. FIG. 4 also shows a magnetic disk drive 96 that reads from or writes to a removable, nonvolatile magnetic disk 98, and an optical disk drive 100 that reads from or writes to a removable, nonvolatile optical disk 102 such as a CD-ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 84, and magnetic disk drive 96 and optical disk drive 100 are typically connected to the system bus 76 by a nonvolatile memory interface, such as interface 106.

The drives or other mass storage devices and their associated computer storage media discussed above and illustrated in FIG. 4, provide storage of computer readable instructions, data structures, program modules and other data for the computer 70. In FIG. 4, for example, hard disk drive 94 is illustrated as storing operating system 110, application programs 112, other program modules 114, and program data 116. Note that these components can either be the same as or different from operating system 84, application programs 86, other program modules 88, and program data 90. Operating system 110, application programs 112, other program modules 114, and program data 116 are given different numbers here to illustrate that, at a minimum, they are different copies.

A user may enter commands and information into computer 70 through input devices or user interface selection devices such as a keyboard 120 and a pointing device 122 (e.g., a mouse, trackball, pen, or touch pad). Other input devices (not shown) may include a microphone, joystick, game pad, satellite dish, scanner, or the like. These and other input devices are connected to processing unit 72 through a user input interface 124 that is coupled to system bus 76, but may be connected by other interface and bus structures, such as a parallel port, game port, or a universal serial bus (USB). A monitor 128 or other type of display device is also connected to system bus 76 via an interface, such as a video interface 130. In addition to the monitor 128, computers often include other peripheral output devices (not shown) such as a printer and speakers, which may be connected through an output peripheral interface (not shown).

The computer 70 may operate in a networked environment using logical connections to one or more remote computers, such as a remote computer 134. The remote computer 134 may be a personal computer, a server, a router, a network PC, a peer device or other common network node, and typically includes many or all of the elements described above relative to computer 70. The logical connections depicted in FIG. 16 include a local area network (LAN) 136 and a wide area network (WAN) 138, but may also include other networks. LAN 136 and/or WAN 138 can be a wired network, a wireless network, a combination thereof, and so on. Such networking environments are commonplace in offices, enterprise-wide computer networks, intranets, and global computer networks (e.g., the Internet).

When used in a local area networking environment, computer 70 is connected to the LAN 136 through a network interface or adapter 140. When used in a wide area networking environment, computer 70 typically includes a modem 142 or other means for establishing communications over the WAN 138, such as the Internet. The modem 142, which may be internal or external, is connected to system bus 76 via the user input interface 134, or other appropriate mechanism. In a networked environment, program modules depicted relative to computer 70, or portions thereof, may be stored in a remote memory storage device (not shown). By way of example, and not limitation, FIG. 4 illustrates remote application programs 144 as residing on the memory device. It will be appreciated that the network connections shown are exemplary and other means of establishing a communications link between the computers may be used.

Generally, the data processors of computer 70 are programmed by means of instructions stored at different times in the various computer-readable storage media of the computer. Programs and operating systems are typically distributed, for example, on floppy disks or CD-ROMs. From there, they are installed or loaded into the secondary memory of a computer. At execution, they are loaded at least partially into the computer's primary electronic memory. The invention described herein includes these and other various types of computer-readable storage media when such media contain instructions or programs for implementing the steps described herein in conjunction with a microprocessor or other data processor. The invention also includes the computer itself when programmed according to the methods and techniques described herein.

For purposes of illustration, programs and other executable program components, such as the operating system, are illustrated herein as discrete blocks. It is recognized, however, that such programs and components reside at various times in different storage components of the computer, and are executed by the data processor(s) of the computer.

Although described in connection with an exemplary computing system environment, including computer 70, the invention is operational with numerous other general purpose or special purpose computing system environments or configurations. The computing system environment is not intended to suggest any limitation as to the scope of use or functionality of the invention. Moreover, the computing system environment should not be interpreted as having any dependency or requirement relating to any one or combination of components illustrated in the exemplary operating environment. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics including mobile telephones, network PCs, minicomputers, mainframe computers, distributed computing environments that include any of the above systems or devices, and the like.

Embodiments of the invention may be described in the general context of computer-executable instructions, such as program modules, executed by one or more computers or other devices. Generally, program modules include, but are not limited to, routines, programs, objects, components, and data structures that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

In operation, computer 70 executes computer-executable instructions such as those described herein for performing a computer setup. Computer 70 initiates an autorun function loads a driver for the communications router by way of the autorun function. Computer 70 also has setup software installed thereon via the communications router.

Those skilled in the art will note that the order of execution or performance of the methods illustrated and described herein is not essential, unless otherwise specified. That is, it is contemplated by the inventors that elements of the methods may be performed in any order, unless otherwise specified, and that the methods may include more or less elements than those disclosed herein.

Information in this document, including uniform resource locator and other Internet web site references, is subject to change without notice. Unless otherwise noted, the example companies, organizations, products, domain names, e-mail addresses, logos, people, places and events depicted herein are fictitious, and no association with any real company, organization, product, domain name, e-mail address, logo, person, place or event is intended or should be inferred.

When introducing elements of the present invention or the embodiments thereof, the articles "a," "an," "the," and "said" are intended to mean that there are one or more of the elements. The terms "comprising," "including," and "having" are intended to be inclusive and mean that there may be additional elements other than the listed elements.

In view of the above, it will be seen that the several objects of the invention are achieved and other advantageous results attained.

As various changes could be made in the above constructions and methods without departing from the scope of the invention, it is intended that all matter contained in the above description and shown in the accompanying drawings shall be interpreted as illustrative and not in a limiting sense.

## Claims

1. An apparatus comprising:
first and second connectors, each of said connectors being adapted for connection to a computer;
a communications router operatively situated between the connectors;
a nonvolatile memory operatively situated between the connectors, said memory storing a driver for the communications router and a software load to be installed on a computer to which either the first connector or the second connector is connected.

2. The apparatus of claim 1, wherein the software load comprises a user interface for guiding a user to transfer files from a computer to which the first connector is connected to another computer to which the second connector is connected.

3. The apparatus of claim 2, wherein the software load comprises a setup program for installing the user interface.

4. The apparatus of claim 1, wherein the connectors comprise universal serial bus (USB) connectors.

5. The apparatus of claim 1, wherein the driver for the communications router causes the communications router to appear as a USB network connection to a computer to which either the first connector or the second connector is connected.

6. The apparatus of claim 1, wherein the nonvolatile memory appears as an autorun device to a computer to which either the first connector or the second connector is connected.

7. A method of performing a computer setup comprising:
operatively connecting a communications router and a nonvolatile memory between two computers;
initiating an autorun function by at least one of the computers;
loading a driver for the communications router to at least one of the computers in response to the autorun function, said driver residing in the nonvolatile memory;
installing setup software to at least one of the computers via the communications router, said setup software also residing in the nonvolatile memory.

8. The method of claim 7, wherein initiating the autorun function includes permitting the nonvolatile memory to be detected as a new hardware device.

9. The method of claim 7, wherein the setup software comprises a user interface for guiding a user to transfer files between the two computers.

10. The method of claim 9, wherein the user interface comprises a migration utility for guiding the user to migrate files from one of the computers to the other one of the computers via the communications router.

11. The method of claim 7, further comprising operatively situating the nonvolatile memory and the communications router between a pair of universal serial bus (USB) connectors, and wherein operatively connecting the nonvolatile memory and the communications router includes connecting the USB connectors to corresponding USB ports on the computers.

12. The method of claim 7, wherein the driver for the communications router causes the communications router to appear as a USB network connection to the computers.

13. The method of claim 7, wherein initiating the autorun function comprises showing the nonvolatile memory as a CD-ROM device to the computers.

14. The method of claim 7, wherein initiating the autorun function and loading the driver is performed using plug and play technology.

15. The method of claim 7, further comprising timing out after a predetermined period of time if a connection to only one of the computers is detected.

16. The method of claim 7, wherein one or more computer-readable media have computer-executable instructions for performing the method of claim 7.

17. One or more computer-readable media comprising:
a driver for a communications router;
a user interface for guiding a user to transfer files from one computer to another computer via the communications router; and
a setup program for automatically installing the user interface.

18. The computer-readable media of claim 17, wherein the driver for the communications router causes the communications router to appear as a universal serial bus (USB) network connection to a computer.

19. The computer-readable media of claim 17, wherein the setup program resides on a nonvolatile memory and further comprising autorun information for identifying the nonvolatile memory as a CD-ROM device for automatically launching the setup program.

20. The computer-readable media of claim 17, wherein the user interface comprises a migration utility for guiding the user through a file migration.
